# EUROPEAN PATENT APPLICATION

(11) **EP 2 228 578 A1**
(43) Date of publication of application: **15.09.2010**
(21) Application number: 09155059.0
(22) Date of filing: 13.03.2009
(51) Int. Cl.: F16L 11/08

(54) **High nitrogen stainless steel wire for flexible pipe**

(71) Applicant: NV Bekaert SA, 8550 Zwevegem (BE)
(72) Inventor: Franck, Arnold, 9100 Sint-Niklaas (BE); Antoine, Pascal, 59273 Péronne en Melantois (FR)
(74) Representative: Messely, Marc

(57) **Abstract**

The invention relates to the use of a HNSS for an armouring layer (1,3,4,5) of a flexible pipe for transportation of oils and/or gases forming hydrogen sulphide (H₂S), said flexible pipe comprising at least one unbonded armouring layer and at least one unbonded sealing layer wherein the HNSS comprises at least 0.4 % by weight of nitrogen (N).

## Description

### Technical Field

The invention relates to a flexible pipe comprising high nitrogen austenitic stainless steel (HNSS). The invention also relates to the use of a HNSS for a flexible pipe.

In particular the invention relates to a flexible pipe for offshore transportation of gases and aggressive fluids, such as e.g. crude oil.

### Background Art

Flexible pipes of the present invention are used for the transport of fluids and gases in different depths of water. They are used especially in situations where very high or varying water pressure exists along the longitudinal axis of the pipe. As examples can be mentioned riser pipes which extend from the seabed up to an installation on or near the surface of the sea. Pipes of this type are also used between installations, which are located at great depths on the seabed, or between installations near the surface of the sea. US 6,123,114 and US 6,085,799 describe examples of flexible pipes.

Flexible pipes typically comprise an inner liner, which forms a barrier against the outflow of the fluid, which is conveyed through the pipe. Around the inner liner there is wound one or more armour layers which are not chemically bound to the inner liner but which can move in relation thereto, which ensures the flexibility of the pipe during laying out and operation.

Around the armour layers an outer sheath is provided with the object of forming a barrier against the ingress-of fluids from the pipe surroundings to the armour layers. In order to prevent the collapse of the inner liner, the inner liner is often provided on the inner side with a flexible, wound pipe, a so-called carcass.

Unbonded flexible pipes are well known in the art. They are e.g. disclosed in WO 2006/097112 and WO 01/61232.

The term "unbonded" means that at least two of the layers including the armour layers are not bonded to each other. In practice the pipe will comprise at least two armour layers, which are not bonded to each other directly or indirectly via other layers along the pipe. As a result, the pipe becomes bendable and sufficiently flexible to roll up for transportation. The above-mentioned type of flexible pipes are used, among other things, for off shore as well as some on-shore applications for the transport of fluids and gases.

In traditional flexible pipes, the one or more outer armour layers are most often in the form of helically wound steel wires e.g. shaped as profiles, where the individual layers may be wound at different winding angle relative to the pipe axis. The carcass is typically made from wound steel strips.

A flexible pipe needs to fulfil a number of requirements. First of all, the pipe should have high mechanical strength to withstand the enormous forces it will be subjected to during transportation, laying down and in operation. The internal pressure (from inside of the pipe and outwards) and the external pressure (from outside of the pipe) are very high and may vary considerably. Simultaneously the flexible pipe should be very resistant to corrosive fluids. Furthermore, it is important that the weight is kept sufficiently low as a too high weight may rupture the pipe during laying out, and the pipe must be able to carry its own weight. Also, the more weight the more expensive the transportation.

In order to fulfil these requirements in prior art flexible pipes, the armour layers or at least some of the armour layers were made by steel alloy compositions of high corrosion resistance and/or high strength compositions. Said compositions however are very expensive due to the high amount of expensive alloy components, such a Ni, Mn, Co and/or Cu. WO 2004/079028 describes a stainless steel alloy for use in wire applications in oil and gas exploration in sea water environments.

Another typical problem however with flexible pipes for transportation of crude oils and gases is the formation of hydrogen sulphide (H₂S) gases. Small amounts of hydrogen sulphide occur in crude petroleum but natural gas can contain up to 90 %. The processes of hydrogen-sulphide cracking (HSC) and internal hydrogen-induced cracking caused by the hydrogenation of some microvolumes can be regarded as especially dangerous. The process of internal hydrogen-induced cracking manifests itself in the form of delaminations and surface cracks in the walls of the pipelines. This type of fracture is directly connected with the nature, shape, and location of nonmetallic inclusions (Makarenko et al., Materials Science, Vol. 39, No. 6, 2003).

WO 2006/097112 describes a duplex steel comprising between 0.15 and 0.25 wt % of nitrogen. In WO 2006/097112 it is envisaged that as long as the content is kept below 0.25 wt % of nitrogen, formation of pores, stress-corrosion cracking and hydrogen induced cracking will be negligible. At levels above about 0.10 wt % it has been found that nitrogen increases the strength and furthers a slight increase in corrosion resistance, particularly resistance to pitting corrosion has also been observed. Nitrogen is an important alloying element as a strong austenitizer. Thus, a too low amount of nitrogen may provide a too little austenite phase. Prior art use of nitrogen containing steel has, however, shown that the nitrogen may result in the formation of pores in the material and formation of stress-corrosion cracking and hydrogen induced cracking when used in corrosive aggressive environments such as in contact with H2S.

US 6,408,891 also describes that the amount of nitrogen should be kept low, since nitrogen is known to generate porosity in the material, which may be fatal if the material is used in offshore applications, in particular in environments which comprise H₂S.

### Disclosure of Invention

It is also an object of the invention to provide a flexible pipe which combines superior corrosion resistance and strength with increased resistance against hydrogen sulphide formation.

It is a further object of the invention to select a steel alloy for use as armour material in an unbonded flexible pipe, which material does not have the drawbacks as mentioned above.

Yet another object of the invention is to provide an unbonded flexible pipe for offshore transportation at deep water, which unbonded flexible pipe is cheaper than prior art deep water unbonded flexible pipes.

All percentages in this disclosure are % by weight (wt %) unless otherwise specified.

Against all expectations, it has been found that a high nitrogen austenitic stainless steel (HNSS) having a nitrogen (N) composition of at least 0.4 wt % is as suitable for use in flexible pipes as a steel alloy comprising much larger amounts of expensive alloy components. It has thus been found that in spite of the high content of nitrogen this steel, in the use as defined in the claims, has both a sufficient mechanical strength and a sufficient resistance to corrosion, as well as an effective resistance against hydrogen sulphide, when transporting aggressive fluids and when used at deep waters.

According to a first aspect of the present invention there is provided a flexible pipe comprising HNSS having over 0.4 wt % of nitrogen. It has surprisingly been found that the high content of nitrogen has no severe effects despite what was described in the prior art. No sensitivity to hydrogen-induced cracking has been observed even when the flexible pipe of the invention has been used in H₂S aggressive environments.

Definition of HNSS

An austenitic stainless steel should be considered "high-nitrogen" if it contains more nitrogen than can be retained in the material by processing at atmospheric pressure; for most alloys this limit is approx. at 0.4 wt %.

In one embodiment the high nitrogen austenitic stainless steel according to the present invention comprises: 0.005-0.25 wt % of carbon (C); 10.0-35.0 wt % of chromium (Cr); 0.2-30.0 wt % of manganese (Mn); 0.05-8.0 wt % of molybdenum (Mo); 0.01-4.0 wt % of copper (Cu); 0.01-30.0 wt % of nickel (Ni); 0.4-4 wt % of nitrogen (N).

In another embodiment the high nitrogen austenitic stainless steel according to the present invention comprises: 0.005-0.25 wt % C; 15.0-35.0 wt % Cr; 0.2-10.0 wt % Mn; 0.05-8.0 wt % Mo; 0.01-4.0 wt % Cu; 0.01-5.0 wet % Ni; 0.8-1.8 wt % N; Si 2.0 wt %; P 0.03 wt %; S 0.05 wet %; Al 0.030 wt %; 0 0.020 wt %.

The high nitrogen austenitic stainless steel according to the present invention may further contain one or more additive elements such as e.g. 0.01-0.5 wt % Ti; 0.01-8.0 wt % W; 0.01-5.0 wt % Co; 0.01-0.5 wt % Nb; 0.01-1.0 wt % V; 0.01-0.5 wt % Ta; 0.01-0.5 wt % Zr; 0.001-0.01 wt % B; 0.001-0.01 wt % Ca; 0.001-0.01 wt % Mg.

A high nitrogen content is favourable for an increased tensile strength without the loss of ductility. The tensile strength after solution treatment and cold working is preferably not less than 1800 to 2000 MPa, and elongation is not less than 10 %.

Flexible pipes

As mentioned above, an unbonded flexible pipe may comprise one or more armour layers. According to the invention the HNSS is used for the production of one or more of these armour layers.

According to a second aspect of the present invention there is provided for the use of HNSS for a flexible pipe, wherein the high-content nitrogen stainless steel comprises over 0.4 wt % of nitrogen.

The wires of the invention allow production of ultra-high-strength HNSS wires (yield strength > 2500 MPa, e.g. > 2600 MPa).

HNSS is especially useful for flexible pipes considering its high yield, tensile strength and ductility, high strength fracture toughness combination, high strain-hardening potential, resistance to deformation-induced martensite formation, low magnetic permeability and an increased corrosion resistance.

Austenitic stainless steels comprising a high content of nitrogen homogeneously dissolved in their matrix offer properties, each of which on their own is highly favourable but which in combination are truly exceptional: high strength without loss of toughness, high strain hardening potential without formation of strain-induced martensite, favourable corrosion properties (e.g. stress corrosion cracking) and an austenite-stabilizing effect of nitrogen (substitution principle, saving of expensive alloy materials).

Until recently, the nitrogen content of stainless steel wire was limited to about 0.4 wt %, and this due to the production process under atmospheric pressure. Pressurized electro slag remelting (PESR) made it possible to produce HNSS wires, which have a nitrogen content higher than 0.4 wt %.

The HNSS may be subjected to subsequent treatments, such as e.g. a final annealing to obtain maximum softness and ductility by heat treatment which also produces a homogeneous structure. An annealing relieves stresses that may have built up in the material e.g. during cold working and ensures maximum corrosion resistance.

The steel may preferably be shaped as wires or strips. The shape of such wires and strips used for forming armours of flexible unbonded pipes are well known. Examples can be found in US 6691743, US 6668867, US 5813439, WO 0242674, US 5730188, US 6354333, US 4549581 , US 6192941 , US 6283161 , WO 0181809 and WO 0036324, which are hereby incorporated by reference.

In one embodiment of the invention, the flexible pipe comprises an internal sealing layer and an inner armouring layer (carcass) inside the internal polymer sealing layer. According to the invention the high content N steel may preferably be used for the production of this carcass.

The flexible unbonded pipe of the invention may in principle have any size and length, as it is generally known in the art. Generally such flexible unbonded pipes are of a relatively large dimension, e.g. with inner diameters larger than 2.5 inches (6.5 cm), such as at least 4 inches (10.5 cm) or larger, such as at least 6 inches (15.7 cm) or larger, such as at least 8 inches (20.9 cm) or larger, such as between 10 inches (26.2 cm) and 20 inches( 52.3 cm), such as between 11 inches (28.8 cm) and 18 inches (47.1 cm).

In another embodiment, the flexible pipe comprises 3 or more unbonded layers including an internal sealing layer, surrounded by two or more outer armouring layers. The high content N steel may preferably be used for the production of at least one of said outer armouring layers. In general it is often most simple to produce all outer armouring layers from the same material. Thus preferably the high content N steel is used for all outer armouring layers in this embodiment. The outer armouring layers may, as it is well known, comprise an outer sheath.

Other constructions of the flexible pipe comprising high content nitrogen steel in accordance with the invention may be used.

In one embodiment, the flexible unbonded pipe comprises an outer sheet surrounding one or more outer armouring layers. The outer sheath may be permeable to gasses and/or liquid. In one embodiment, the outer sheath is liquid tight in order to prevent the ingress of sea water in use. The outer sheath may e.g. be of a thermoplastic or termoset material, such as polyethylene (PE) and polyamide (PA), (e.g. nylon 6, nylon 1 1 or other) and other e.g. as disclosed as materials for outer sheaths in US 4706713 and WO 03083344 incorporated by reference.

In general flexible unbonded pipes are divided into two main groups a) flow lines used for transporting fluids along the seabed at seabed level, and b) raisers used for transporting fluids from the seabed level to a higher level e.g. to an installation or a ship at sea surface level. In one embodiment the flexible unbonded pipe of the invention is a raiser. In another embodiment the flexible unbonded pipe of the invention is a flow line.

The requirement of the outer armouring layers of a flexible pipe depends largely on the use of the pipe. Use on deeper water normally requires higher strength. The same accounts for use at shallow waving water, in particular if the pipe is a raiser. The requirement of the material of armouring layers with respect to corrosion resistance depends largely on how corrosive the sea and the fluids to be transported are. In general it is, however, desired that the corrosion resistance of the armouring layers should be relatively high.

The flexible unbonded pipe of the invention may preferably comprise an inner armouring layer (carcass) inside the internal polymer sealing layer. The use of such carcass is well known in the art. The carcass of a flexible unbonded pipe is in use subjected to the fluid which is transported in the pipe. When transporting aggressive and corrosive fluids such as crude oil, H2S and similar, the material of the carcass needs to be highly resistive to hydrogen sulphide gases.

The flexible unbonded pipe of the invention may in one embodiment comprise an inner carcass armouring layer and two or more outer armouring layers, wherein the two armouring layers are of wound wires, cross wound at angles of 40-60 degrees, such as 45-58 degrees, such as 53-56 degrees to the centre axis of the pipeline. Preferably two or more of the armouring layers including the carcass are of the HNSS.

The flexible unbonded pipe of the invention may in one embodiment comprise an inner carcass armouring layer and three or more outer armouring layers, wherein the inner most of the outer armouring layers is a vault of wound wires, wound at a steep angle to the centre axis of the pipe, e.g. above 80 degree, such as above 90 degree, and the other two armouring layers are of wound wires, cross wound at angles of 30-40, and 70-80 degrees, respectively. Preferably two or more such as all of the armouring layers including the carcass, are of the HNSS.

The flexible unbonded pipe of the invention may comprise other layers such as it is well known in the art, e.g. insulation layers of polymers, composite, cork or other, intermediate polymer sheaths or films and etc.

The flexible unbonded pipe of the invention may have a structure as described in any one of the prior art documents US 6691743, US 6668867, US 5813439, WO 0242674, US 5730188, US 6354333, US 4549581 , US 6192941 , US 6283161 , WO 0181809, WO 0036324, US 6454897, US 6408891 and US 61 10550, with the difference that at least one of the armouring layers is made from the HNSS. These prior art documents are hereby incorporated by reference.

In one embodiment of the flexible unbonded pipe of the invention, the one or more armouring layers of the HNSS have an average material thickness of between 0.4 and 20 mm, preferably between 0.6 and 15 mm, such as between 8 and 12 mm.

The thickness depends largely on which type of armour layer is in question and how it should be formed. As mentioned above, it is generally known to provide the armour layers from wires or strips which are wound to form the armour layer(s). Thus, in one embodiment at least one armouring layer of the HNSS is made from wires or strips, which have preferably been wound.

In one embodiment of the flexible unbonded pipe, at least one armouring layer of HNSS is made from interconnected wire(s), which preferably each have a profile so that the wires are mechanically interconnected. This armour layer may preferably be an outer armour layer.

In one embodiment, the carcass is made from interconnected wires wherein the wires have a K profile as disclosed in WO 0181809.

In another embodiment wherein the armour layer is made from wires of HNSS, the wires preferably have an average material thickness of between 1.5 and 15 mm, preferably between 2 and 10 mm. The width of the wires may e.g. be between 7 and 20 mm.

In a further embodiment of the flexible unbonded pipe of the invention, at least one armouring layer of HNSS is made from strips which have been folded and wound, preferably the folded strips are mechanically interconnected. Preferably, the carcass is made from folded and mechanically interconnected strips. The strips may, preferably, be folded to have a cross section shaped as a lying S (an endless lying S shape) as it is well known. The strip, preferably, has an average material thickness of between 0.5 and 5 mm, such as between 0.6 and 3 mm. The material thickness is the thickness of the material in unfolded condition. When unfolded the strips may preferably have a width of 35-180 mm. When folded as a lying S, the width (corresponding to the height of the S) may preferably be between VA and Vz of the unfolded width.

In a third aspect the invention also relates to the use of the above described flexible unbonded pipe of the invention for the transportation of hydrocarbon fluids at deep water, preferably deeper than 1000 meters, such as deeper than 1500 meters, wherein the flexible unbonded pipe may be a flow line and/or a raiser. The flexible pipe is particularly well resistant against the adverse effects of hydrogen sulphide gases.

Manufacturing of HNSS

Nitrogen alloying of steels can be performed in the liquid or solid state. In the liquid or molten state, nitrogen can be alloyed using gaseous nitrogen or solid nitrogen bearing additives. It has been generally agreed that gas phase alloying with nitrogen is simpler and more advantageous.

High nitrogen steels may be produced in the liquid state by any of the following processes, such as e.g. induction furnace, electric arc furnace, gas purging of liquid alloys, argon oxygen decarburization (AOD), pressure electroslag remelting (PESR), plasma arc melting, arc-slag melting or high pressure melting in hot iso-static press unit.

PESR is a safe high pressure technique involving lower volumes of liquid metal. A primary concern with large scale production using high pressure induction melting is the inherent safety risks involved in dealing with large volumes of liquid metal highly supersaturated with nitrogen with respect to atmospheric pressure.

Commercial production of high nitrogen steels is currently accomplished using a PESR furnace capable of producing 20 ton ingots under a maximum N₂ gas pressure of 4.2 Mpa. PESR is today the most widely used process for commercial production of nitrogen steel ingots up to 20 tons.

Nitrogen contents of over 0.4 wt % can be obtained by Pressurized Electro Slag Remelting (PESR). Nitrogen levels exceeding 1 wt % can be commercially produced, whereas levels of 4 wt % can be reached for research-scale materials.

Yield and tensile strength exceed AISI 200 and 300 series by 200-350 %.

Cr-Mn stainless steel grades are probably the most typical examples for high-nitrogen austenitic steels. It is the combination of high Cr and Mn contents that allows the alloying of nitrogen in levels above those of Cr-Ni and Cr-Ni-Mo steels. Most typical are variations of an 18Cr-18Mn steel with a nitrogen content higher than 0.4 wt %, e.g. higher than 0.5 wt %, e.g. higher than 0.6 wt %. Examples of chemical composition of Cr-Mn steel grades are presented in Table 1.

**Table 1**

| Name | Cr | Mn | Mo | N | Others |
|---|---|---|---|---|---|
| Steel 1 | 18 | 18 | 2.0 | 0.8 | |
| Steel 2 | 17 | 10 | 3.0 | 0.5 | C 0.2 |
| Steel 3 | 18 | 14 | 3.0 | 0.8 | |
| Steel 4 | 19 | 24 | 2.5 | 1.2 | Cu 1.0 |
| Steel 5 | 21 | 23 | 0.7 | 1.0 | |
| Steel 6 | 15 | 17 | 2.2 | 0.45 | |
| Steel 7 | 18 | 20 | 3.0 | 0.7 | V 0.5 |

Another group involves "Ni-free" steel grades having less than 0.2 wt % of Ni and an elevated corrosion resistance.

Physical metallurgy

Interstitial elements (N, C and B) increase the strength of austenitic stainless steels much more than substitutional elements, and nitrogen is more effective than any other element. The alloyed nitrogen is not precipitated in the form of nitrides.

The total contribution of nitrogen to the flow stress of austenitic stainless steel is made up of two components, a strongle thermal one, primarily due to solid-solution strengthening and proportional to N½, and a thermal component, generally attributed to nitrogen enhanced grain size strengthening, which is proportional to N. The grain size hardening effect increases proportionally to the nitrogen concentration. This is important since a disadvantage of carbon alloyed austenitic stainless steel is their low potential for grain size hardening.

The increase in strength caused by interstitially dissolved nitrogen is relatively independent of the Ni and Mn content.

Strength and ductility of HNSS

1 wt % of nitrogen in solid solution can triple the yield strength and double the ultimate tensile strength of austenitic stainless steels. Alloying with high nitrogen concentrations increases the strength without a corresponding drop in ductility.

High nitrogen austenitic stainless steel shows a significant variation in strength with grain size. It is therefor preferred to keep the grain size as small as possible.

The strength of a HNSS can be increased even more (over 2000 MPa) by cold deformation, however reducing ductility. But even so, the combination of strength and ductility is far superior to low alloy steels. The cold work growth rate increases markedly with increasing nitrogen content.

Thermal stability: Cr₂N precipitation

Alloys must contain more than 10 wt % of chromium to be classified as a stainless steel. Cr plays a major role in the corrosion resistance of stainless steels. Generally, increasing Cr content increases corrosion resistance. Cr also is the most important ferrite former of the steel and, in combination with other ferrite formers and with a balanced content of the austenite formers of the steel, gives a duplex character of the steel. If the Cr content is low, there is a risk that the steel will contain martensite, and if the Cr content is high, there is a risk of impaired stability against precipitation of intermetallic phases and so called 475'- embrittlement, and an unbalanced phase composition of the steel.

Nitrogen solubility is determined by the equilibrium between the matrix and Cr₂N. When the nitrogen concentration is above this limit, the alloy is susceptible to Cr₂N precipitation. HNSS is susceptible to nitride precipitation between approximately 600 and 1050 °C. Nitride precipitation has very little influence on the yield and ultimate strength, but significantly reduces material plasticity and results in embrittlement under unaxial and impact loading. This must be avoided.

Corrosion and wear resistance

Nitrogen in solid solution reduces wear and improves wear resistance of austenitic stainless steel.

Nitrogen in solid solution is 20 times more effective than chromium in improving the corrosion resistance of stainless steel. High nitrogen stainless steels present a better stress corrosion cracking resistance than standard stainless steel either in the solution annealed condition or in the cold worked condition in an environment more aggressive than would be expected from sea water.

Pedrazzoli and Speidel (1990) studied the influence of the nitrogen and carbon concentration on stress corrosion cracking in Cr18Mn18 steels and concluded that the lowering of the carbon content below 0.1 mass% is the only reason for the improved SCC behaviour while the role of nitrogen amounts to an increase in the yield strength without deteriorating the SCC resistance. This test was done in hot water. But the SCC resistance increases with increasing nitrogen content in environments more aggressive than hot water. The positive effect of nitrogen could be due to the retarded initiation of local corrosion sites.

H₂S corrosion resistance

The most plausible hypothesis to explain the harmful effect of hydrogen on the mechanical properties is the one of hydrogen-enhanced localised plasticity. This hypothesis considers hydrogen embrittlement as a macro-brittle phenomenon which develops from hydrogen-assisted microplasticity (a local decrease in the stress required for the generation and motion of dislocations).

The hypothesis of hydrogen-enhanced localised plasticity was supported by in-situ TEM observations of a decrease in the stress required to move dislocations in front of a crack and to propagate cracks in hydrogenated steel AISI 316. At the tip of the cracks, and α' phases were also observed and the stress required for their formation was decreased by hydrogen.

The beneficial effect of nitrogen on the mechanical behaviour of austenitic steels under hydrogen attack is not concerned with interatomic bonding.

The effect of nitrogen on hydrogen-induced phase transformation was studied using X-ray diffraction. It was shown that nitrogen increases the concentration of hydrogen in the Y solid solution and prevents a hydrogen-induced Y to ε transformation. Thus, if the hydrogen-induced phase εH really promotes brittle fracture, the positive effect of nitrogen on the plasticity can be understood. Hydrogen brittleness occurs in absence of hydrogen-induced phases.

Nitrogen can limit the hydrogen transport to the zones of lattice dilatation under applied stress and, in such a way, prevent a critical hydrogen concentration needed for starting local microplastic deformation as well as for the generation of microcracks and their growth.

### Brief Description of Figures in the Drawings

Figure 1 is a schematic view of an unbonded pipe with a carcass.

Figure 2 is a schematic view of an unbonded pipe without a carcass.

Figure 3 is a schematic side view of a folded and wound strip.

Figure 4 illustrates a more detailed construction of an armoured flexible pipe.

### Mode(s) for Carrying Out the Invention

Evaluation of mechanical properties of HNSS

Two different commercial high nitrogen austenitic stainless steel samples have been evaluated for use in flexible pipes. Both wire rod samples are Cr-Mn steel grades with very low Ni content (<=0.30 wt %). Sample one has a high N content of 0.97 wt %) and a very high Mn content of 23 wt %. Mn increases the solubility of N.
Sample two has a N content of 0.53 wt % and a Mn content of 10.5 wt %. Both samples present very low Ni content (<0.5 wt %) in comparison with the AISI 300 series (AISI 302, AISI 304 and AISI 316L).

The two wire rod samples, together with three 300 series samples, were tested on mechanical properties, as summarized in Table 2. Table 3 shows the chemical composition of the nitrogen steels investigated.

**Table 2**

| Material | Grain size (µm) | R_{P0,2} (N/mm²) | Rₘ (N/mm²) | Δσ ₌ Rₘ-R_{P0.2} | Aᵤ (%) | A (%) |
|---|---|---|---|---|---|---|
| 304 | 43 | 247 | 595 | 348 | 48.1 | 53.6 |
| 302A | 78 | 248 | 606 | 358 | 51.3 | 54.8 |
| 316L | 50 | 235 | 559 | 324 | 45.4 | 51.4 |
| Steel 2 | 9 | 669 | 1012 | 343 | 36.5 | 42.0 |
| Steel 5 | 68 | 609 | 962 | 353 | 35.9 | 45.3 |

**Table 3**

| Material | C | Cr | Ni | N | Mo | Mn | Si | Cu |
|---|---|---|---|---|---|---|---|---|
| 304 | 0.04 | 18.18 | 8.8-10 | 0.05 | ? | 0.80 | 0.43 - | - |
| 302A | 0.07 | 18.36 | 8.40 | 0.04 | 0.37 | 0.55 | - | 0.43 |
| 316L | 0.01 | 16.94 | 11.19 | 0.01 | 2.07 | 1.63 | - | - |
| Steel 2 | 0.20 | 17.25 | 0.05 | 0.53 | 3.30 | 10.50 | 0.45 - | - |
| Steel 5 | 0.08 | 21 | 0.30 | 0.97 | 0.70 | 23 | 0.75 | 0.25 |

The yield strength of the HNSS is much higher than the yield strength of the 300 series stainless steel. The strain-hardening is similar for all tested steel grades. Ductility of the HNSS samples is lower than the ductility of the 300 series. Nevertheless, the ductility remains high in comparison to the reached strength levels. The total elongation is still above 40% in the HNSS.

The differences in mechanical properties between the two HNSS samples is not as high as expected by their difference in N content. Sample two despite having a lower N content also has a lower grain size and a higher C content.

Evaluation of drawability of HNSS

A third "Ni-free" high N content HNSS sample was evaluated with sample one for cold drawing properties. The chemical composition is presented in Table 4.

**Table 4**

| Material | C | Cr | Ni | N | Mo | Mn | Si | Cu |
|---|---|---|---|---|---|---|---|---|
| Steel 8 | 0.035 | 21 | 0.01 | 0.96 | 2.4 | 9.6 | 0.20 | 0.17 |

It has been experienced that the HNSS wires harden faster than common 300 series during drawing. The material also stays fully non-magnetic during drawing (no SIM transformation). After 4 drawing passes, 2000 MPa tensile strength may already be reached.

Embodiments of flexible pipes

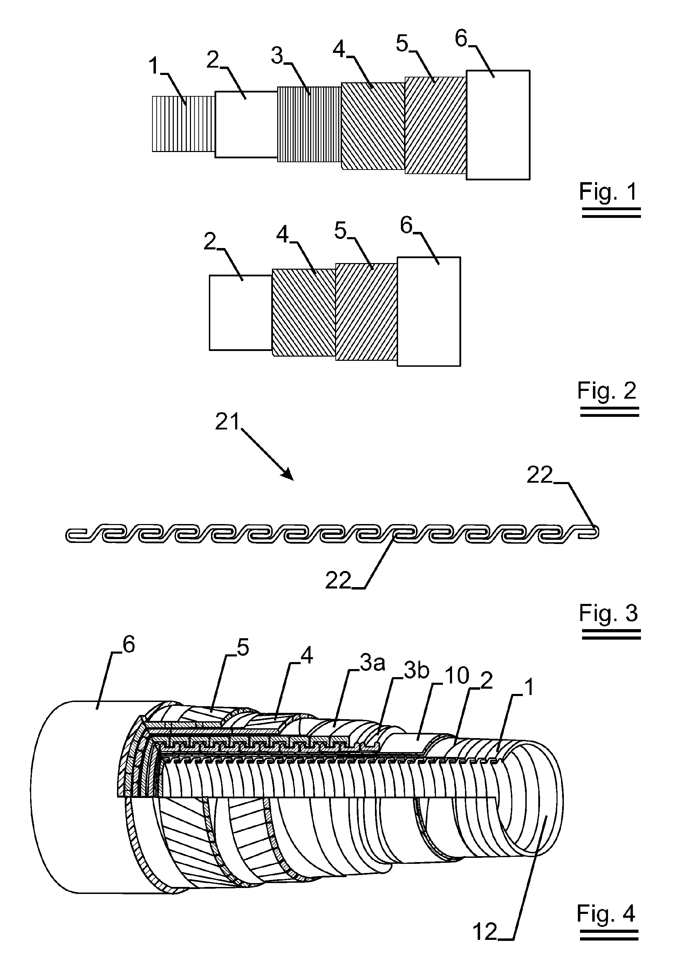

The flexible unbonded pipe shown in Figure 1 comprises an internal sealing layer (2) also called an inner liner, e.g. of cross linked PE. Inside the inner liner (2) the pipe comprises an inner armouring layer (1), called a carcass. On the outer side of the inner liner (2), the flexible unbonded pipe comprises three outer armouring layers (3, 4, 5). The inner armouring layer (3) closest to the inner liner (2), is a pressure armouring layer (3), made from wires wound at a steep angle to the centre axis of the pipe, e.g. close to 90 degrees. Around the pressure armouring layer (3), the pipe comprises a pair of cross wound tensile armouring layers (4, 5), made from wound wires, wherein one of the tensile armouring layers (4) has an angle above 55 degree, typically between 60 and 75 degrees, and wherein the other one of the tensile armouring layers (5) has an angle below 55 degree, typically between 30 and 45 degrees. The outer armouring layers (4, 5) are shielded from the surroundings by an outer sheath (6).

At least one of the armouring layers (1, 3, 4, 5) is made from HNSS wire. Preferably at least the carcass (1) is made from HNSS wire. Preferably one or both tensile armouring layers (4, 5) are made from HNSS wire.

Figure 2 shows another pipe design. This flexible unbonded pipe comprises an inner liner (2) and a pair of outer armouring layers (4, 5) in the form of wires wound around the inner liner (2). The two armour layers are cross wound at an angle to the centre axis of the pipe of close to 55 degree, typically one of the layers is wound at an angle slightly less than 55 degrees, e.g. between 52 and 55 degrees and the other of them is wound at an angle slightly more than 55 degrees e.g. between 55 and 57.

At least one, and preferably both, of the armouring layers (4, 5) is made from HNSS wire.

Figure 3 illustrates the folding and winding of a HNSS strip to become a carcass. The strip is folded to an endless lying S shape (21). The heads (22) of the S are mechanically interlocked into each other as the folded strip is wound to form a pipe shape. The carcass may be formed from one folded strip or from two or more strips, which are wound and mechanically interlocked. Other examples of flexible carcasses made of HNSS wire are possible.

Figure 4 shows a more detailed construction of an armoured flexible pipe with its various layers.

The flexible pipe comprises an inner liner (2), which surrounds a carcass (1) consisting of a helically wound metal strip (12), which forms an inner pipe. During manufacture, the metal strip (12) is formed with flaps, which engage with each other so that they hereby lock the individual windings of the metal strip (12) together in such a manner that the carcass (1) can be bent in its longitudinal direction. According to the invention, the metal strip (12) is preferably made of HNSS wire.

A surrounding inner liner (2) prevents fluids and/or gases from flowing to or from the inside of the pipe. Around the inner liner (2) one or more further layers (10) (the Figure shows one layer) are applied. One or more of said further layers may (partly) comprise HNSS material, in the event that H₂S forming fluids and/or gases escape to said further layers.

On the outside of the one or more layers (10), one or more layers of profiles (3a, 3b) are wound in a helical manner, said profiles forming windings with a large angle in relation to the longitudinal direction of the pipe. As a consequence of the large angle, the profiles are primarily able to absorb radial forces, which arise as a result of inner or outer pressure. The inner pressure arises during operation of the pipe. The outer pressure arises partly as a result of the hydrostatic pressure of the surroundings, and partly as a result of mechanical influences during the laying of the pipe. The windings thus form a pressure armour which prevents the inner liner (2) and the further layers from exploding as a result of high pressure on the inside of the pipe, or from collapsing as a result of high pressure on the outside of the pipe. HNSS wire may be used in any of the layers of profiles (3a,3b).

On the outside of the pressure armour a tensile armour consisting of one or several helically wound layers (4, 5) is provided. HNSS wire is preferably used for layers (4, 5).

Between the pressure armour and the tensile armour an intermediate sheath (not shown in the Figure) can be provided, the purpose of which is to prevent fluids and/or gases from migrating between the tensile armour and the pressure armour. These layers are finally surrounded by an outer sheath (6).

At least one of the armouring layers (1, 3a, 3b, 4, 5) is made from HNSS wire. Preferably at least the carcass (1) is made from HNSS wire.

Use of HNSS in flexible pipes and H₂S resistance

In one example the flexible pipe will be used for transportation of crude oils. In another example the flexible pipe will be used for transportation of natural gases. In either example there will be formation of hydrogen sulphide (H₂S) gases within the carcass (1). Small amounts of hydrogen sulphide occur in crude petroleum but natural gas can contain up to 90 wt %. To avoid or limit the damage caused by the processes of hydrogen-sulphide cracking (HSC) and internal hydrogen-induced cracking, the above wire rod samples will be used to produce a flexible pipe.

## Claims

1. Use of a high nitrogen austenitic stainless steel (HNSS) for an armouring layer of a flexible pipe for transportation of oils and/or gases, said flexible pipe comprising at least one unbonded armouring layer and at least one unbonded sealing layer wherein the HNSS comprises at least 0.40 % by weight of nitrogen (N).

2. Use as claimed in claim 1 wherein the HNSS further comprises: 0.005-0.25 wt % of carbon (C); 10.0-35.0 wt % of chromium (Cr); 0.2-30.0 wt % of manganese (Mn); 0.05-8.0 wt % of molybdenum (Mo); 0.01-4.0 wt % of copper (Cu); 0.01-30.0 wt % of nickel (Ni); 0.4-4 wt % of nitrogen (N).

3. Use as claimed in claim 1 or 2 wherein the flexible pipe comprises an inner liner (2) surrounding an inner armouring layer or a carcass (1) and one or more outer armouring layers (3,4,5) on the outer side of the inner liner, said outer armouring layers comprising at least one pressure armouring layer (3) on the outer side of the inner liner and at least one tensile armouring layer (4,5) surrounding said pressure armouring layer, said outer armouring layers being shielded from the surroundings by an outer sheath (6), and wherein the HNSS is used for at least the inner armouring layer or carcass (1).

4. Use as claimed in any of claims 1 to 3 wherein the HNSS is used for at least one or more of the outer armouring layers (3,4,5).

5. Use as claimed in any of the previous claims wherein the HNSS further comprises one or more additive elements such as e.g. 0.01-0.5 wt % Ti; 0.01-8.0 wt % W; 0.01-5.0 wt % Co; 0.01-0.5 wt % Nb; 0.01-1.0 wt % V; 0.01-0.5 wt % Ta; 0.01-0.5 wt % Zr; 0.001-0.01 wt % B; 0.001-0.01 wt % Ca; 0.001-0.01 wt % Mg.

6. Use as claimed in any of the previous claims wherein the HNSS is a superaustenitic steel having pitting resistance equivalent numbers (PREN) of over 40.

7. Use as claimed in any of the previous claims wherein the HNSS is a "Ni-free" steel having less than 0.2 wt % of Ni.

8. Use as claimed in any of the previous claims wherein the HNSS is obtainable by Pressurized Electro Slag Remelting (PESR).

9. A flexible pipe for transportation of oils and/or gases, said flexible pipe comprising at least one unbonded armouring layer and at least one unbonded sealing layer, wherein said unbonded armouring layer is made of HNSS comprising at least 0.40 % by weight of nitrogen (N).

10. The flexible pipe of claim 9 comprising an inner liner (2) surrounding an inner armouring layer or a carcass (1) and one or more outer armouring layers (3,4,5) on the outer side of the inner liner, said outer armouring layers comprising at least one pressure armouring layer (3) on the outer side of the inner liner and at least one tensile armouring layer (4,5) surrounding said pressure armouring layer, said outer armouring layers being shielded from the surroundings by an outer sheath (6), **characterized in that** at least the inner armouring layer or carcass (1) is made from HNSS, said wire comprising at least 0.40 wt % of nitrogen (N).

11. The flexible pipe of claim 9 or 10, wherein at least one of said outer armouring layers (3,4,5) is made from HNSS.

12. A flexible pipe as claimed in any one of the preceding claims 9-11, wherein at least one armouring layer of HNSS is made from wires or strips, which have preferably been wound.

13. A flexible pipe as claimed in any one of the preceding claims 9-12, wherein at least one armouring layer of HNSS is made from interconnected wire(s) or strip(s), which preferably each have a profile so that the wires are mechanically interconnected.

14. Use of a flexible pipe as claimed in any one of the preceding claims 9-13, for the transportation of hydrocarbon fluids or gases at deep water, preferably deeper than 1000 meters, such as deeper than 1500 meters.
